# EUROPEAN PATENT SPECIFICATION

(11) **EP 4 345 573 B1**
(45) Date of publication and mention of the grant of the patent: **16.07.2025**
(21) Application number: 23729650.4
(22) Date of filing: 04.05.2023
(51) Int. Cl.: H04M 1/03, G06F 1/16, H04R 1/28, H04M 1/02, H04R 1/02

(54) **ELECTRONIC DEVICE INCLUDING SPEAKER**
ELEKTRONISCHE VORRICHTUNG MIT LAUTSPRECHER
DISPOSITIF ÉLECTRONIQUE COMPRENANT UN HAUT-PARLEUR

(30) Priority: 12.08.2022 KR 20220101651; 01.09.2022 KR 20220111038
(43) Date of publication of application: 03.04.2024
(73) Proprietor: Samsung Electronics Co., Ltd., Suwon-si, Gyeonggi-do 16677 (KR)
(72) Inventor: PARK, Jihoon, Suwon-si, Gyeonggi-do 16677 (KR); PARK, Hanbom, Suwon-si, Gyeonggi-do 16677 (KR)
(74) Representative: Nederlandsch Octrooibureau
(86) International application number: PCT/KR2023/006162
(87) International publication number: WO 2024/034783

(56) References cited:
- JP-A- 2014 123 946
- JP-A- 2015 139 036
- KR-A- 20210 003 538
- KR-A- 20220 061 784
- KR-B1- 101 891 972
- US-A1- 2019 342 645
- US-A1- 2021 037 312

## Description

### [Technical Field]

Various embodiments of the present disclosure relate to an electronic device including a speaker.

### [Background Art]

An electronic device may include a speaker for providing an audio signal. The speaker may be configured to output the audio signal. The speaker may be connected to a printed circuit board. The speaker may occupy a partial area of the printed circuit board. The audio signal output from the speaker may pass through a duct, and be transmitted to outside of a housing, through an audio hole.

US 2019/342645 A1, 7 November 2019, is about an electronic device including a display, a speaker, an inner structure including a front surface on which the display is seated, a rear surface having a searing portion for the speaker formed thereon, and a side surface connecting the front surface and the rear surface, and a housing in which the inner structure is seated. The inner structure includes: a first space formed by indentation of a part of the bottom surface of the seating portion toward the front surface of the inner structure, a second space formed to be open toward the front surface of the inner structure such that the second space is connected to and partially overlaps with the first space in a direction defined toward the front surface of the inner structure, and a duct formed to be open toward the side surface of the inner structure such that the duct is connected to and partially overlaps with the second space in a direction defined toward the rear surface of the inner structure.

US 2021/037312 A1, 4 February 2021, is about an electronic device that includes a diaphragm, a speaker module including a speaker configured to output a sound through a vibration of the diaphragm, and a housing accommodating the diaphragm and the speaker module therein and including a first space provided in a first direction from the speaker module and a second space provided in a second direction opposite the first direction. The electronic device further includes an air adsorption member comprising an air adsorbing material disposed in the first space and having a volume ration of 90% or less of the first space, the air adsorption member configured to reduce air resistance to the diaphragm disposed above the speaker module without limiting the vibration of the diaphragm.

KR 2022 0061784 A, 13 May 2022, is about an electronic device that includes: a first housing; a second housing receiving at least one part of the first housing, and guiding the sliding of the first housing; a flexible display including a first display area placed on the first housing and a second display area extended from the first display area; a speaker module including a speaker unit placed in the second housing, and a speaker enclosure housing the speaker unit and including a vent hole; and a sealing member connected with the first housing and the speaker enclosure, and set to be changed based on the sliding of the first housing. Therefore, the present invention is capable of improving a sound quality by adjusting a sound produced from the speaker module.

KR 101 891 972 B1, 28 August 2018, is about a portable terminal with a mounting plate for a micro phone holder, relating to a portable terminal, and more particularly, to a structure capable of efficiently utilizing a space inside a portable terminal.

### [Disclosure]

### [Technical Solution]

The invention is defined in the appended claims.

### [Description of the Drawings]

FIG. 1 is a block diagram of an electronic device in a network environment according to an embodiment.
FIG. 2 is a diagram showing an exemplary electronic device.
FIG. 3 is an exploded perspective view of an exemplary electronic device.
FIG. 4A shows a portion of the rear surface of an exemplary electronic device.
FIG. 4B is a plan view of a printed circuit board and a speaker module of an exemplary electronic device.
FIG. 5A shows a speaker module of an exemplary electronic device.
FIG. 5B is a diagram of the X area of FIG. 5A as viewed from the front.
FIG. 5C is a cross-sectional view of an exemplary speaker module cut along line A-A' of FIG. 5A.
FIG. 6A schematically shows an exemplary connection state between a plate and a case, of a speaker module.
FIG. 6B schematically shows an exemplary connection state between a plate of a housing and a side bezel member.
FIG. 7 is a graph showing a change in a sound pressure level of an audio signal output from an electronic device.
FIG. 8 is a cross-sectional view of an exemplary electronic device cut along B-B' of FIG. 4A.

### [Mode for Invention]

Hereinafter, examples/embodiments will be described in detail with reference to the accompanying drawings. When describing the examples/embodiments with reference to the accompanying drawings, like reference numerals refer to like elements and a repeated description related thereto will be omitted. The person skilled in the art will understand that the features described above and/or below may be combined in any way deemed useful. The drawings of the present disclosure show examples/embodiments of the invention, which will be described in detail hereinafter. It is to be understood that one or more of elements / components shown and/or described in one or more of these examples/embodiments and not in others may be used in those others too unless mechanical or other limitations prevent such an implementation. Moreover, describing features of different examples/embodiments in a single passage does not automatically mean that those features are inextricably linked. They may be applied separately from one another.

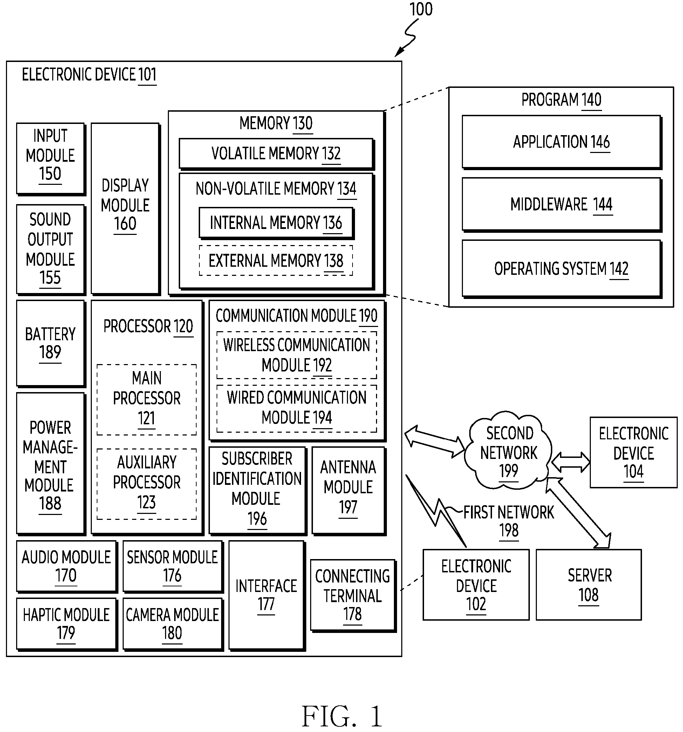

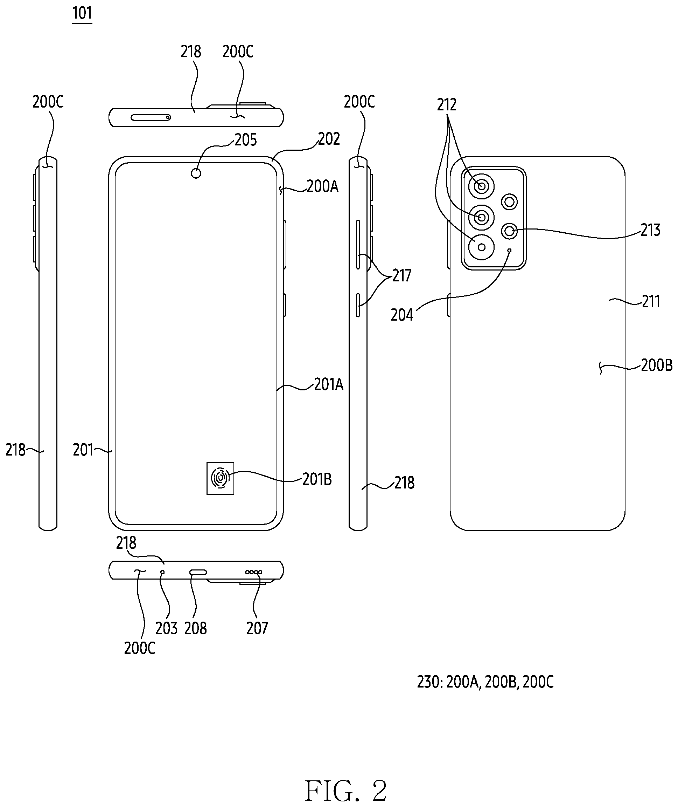

FIG. 1 is a block diagram illustrating an electronic device 101 in a network environment 100 according to various embodiments. One or more of the components illustrated in FIG. 1 and/or described in the following paragraphs may be implemented together with components illustrated in and/or described with references being made to FIG. 2-8.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 2 is a diagram showing an exemplary electronic device. One or more of the components illustrated in FIG. 2 and/or described in the following paragraphs may be implemented together with components illustrated in and/or described with references being made to FIG. 1, 3-8.

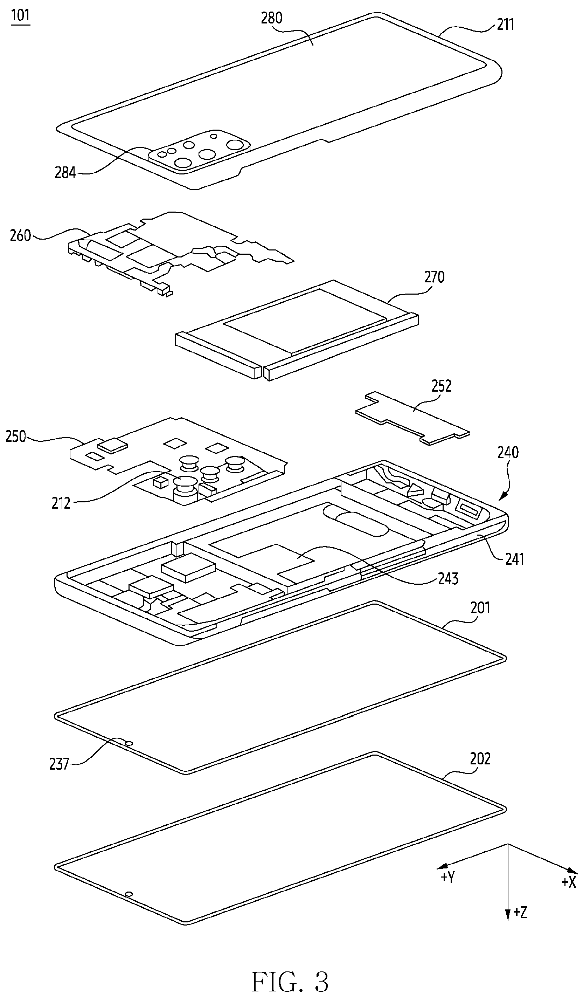

Referring to FIG. 2, an electronic device 200 may include a housing 230 forming an exterior of the electronic device 200. For example, the housing 230 may include a first surface (or a front surface) 200A, a second surface (or rear surface) 200B, and a third surface (or side surface) 200C surrounding a space between the first surface 200A and the second surface 200B. The housing 230 may for instance refer to a structure (e.g., a frame structure 240 of FIG. 3) that forms at least a portion of the first surface 200A, the second surface 200B, and/or the third surface 200C.

The electronic device 200 may include a substantially transparent front plate 202. In an example, the front plate 202 may form at least a portion of the first surface 200A. The front plate 202 may include, for example, a glass plate or a polymer plate including various coating layers, but is not limited thereto.

The electronic device 200 may include a substantially opaque rear plate 211. In an example, the rear plate 211 may form at least a portion of the second surface 200B. The rear plate 211 may be formed of coated or tinted glass, ceramic, polymer, metal (e.g., aluminum, stainless steel (STS), or magnesium), or a combination of at least two of the above materials.

The electronic device 200 may include a side bezel structure (or side member) 218 (e.g., a sidewall 241 of the frame structure 240 of FIG. 3). The side bezel structure 218 may be coupled to the front plate 202 and/or the rear plate 211 to form at least a portion of the third surface 200C of the electronic device 200. For example, the side bezel structure 218 may form the entire third surface 200C of the electronic device 200, or for another example, the side bezel structure 218 may form the third surface 200C of the electronic device 200 together with the front plate 202 and/or the rear plate 211.

Unlike illustrated in FIG. 2, in case that the third surface 200C of the electronic device 200 is partially formed by the front plate 202 and/or the rear plate 211, the front plate 202 and/or the rear plate 211 may include an area that is bent from an edge thereof toward the rear plate 211 and/or the front plate 202 and seamlessly extends. The extending area of the front plate 202 and/or the rear plate 211 may be positioned at both ends of, for example, a long edge of the electronic device 200, but is not limited by the above-described examples.

The side bezel structure 218 may include the metal and/or the polymer. The rear plate 211 and the side bezel structure 218 may be integrally formed and may include the same material (e.g., a metal material such as aluminum), but are not limited thereto. For example, the rear plate 211 and the side bezel structure 218 may be formed in a separate configuration and/or may include a different material.

The electronic device 200 may include at least one of a display 201, an audio modules 203, 204, and 207, a sensor module (not shown), a camera modules 205, 212, and 213, a key input device 217, a light emitting element (not shown), and/or a connector hole 208. In another embodiment, the electronic device 200 may omit at least one of the above components (e.g., the key input device 217 or the light emitting element (not shown)), or may additionally include another component.

The display 201 (e.g., a display module 160 of FIG. 1) may be visually exposed through a substantial portion of the front plate 202. For example, at least a portion of the display 201 may be visible through the front plate 202 forming the first surface 200A. The display 201 may be disposed on the rear surface of the front plate 202.

The outer shape of display 201 may be formed substantially the same as the outer shape of the front plate 202 adjacent to the display 201. In order to expand an area where the display 201 is visually exposed, the gap between the outer edge of the display 201 and the outer edge of the front plate 202 may be formed to be substantially the same.

The display 201 (or the first surface 200A of the electronic device 200) may include a screen display area 201A. The display 201 may for example provide visual information to a user through the screen display area 201A. In FIG. 2, it is illustrated that when the first surface 200A is viewed from the front, the screen display area 201A is spaced apart from the outer edge of the first surface 200A and is positioned inside the first surface 200A, but is not limited thereto. In another example, when the first surface 200A is viewed from the front, at least a portion of the edge of the screen display area 201A may substantially coincide with the edge of the first surface 200A (or the front plate 202).

The screen display area 201A may include a sensing area 201B configured to obtain user's biometric information. Here, the meaning of "the screen display area 201A includes the sensing area 201B" may be understood as that at least a portion of the sensing area 201B may overlap the screen display area 201A. For example, the sensing area 201B, like another area of the screen display area 201A, may display the visual information by the display 201 and additionally may mean an area that may obtain the user's biometric information (e.g., fingerprints). In another example, the sensing area 201B may be formed in the key input device 217.

The display 201 may include an area where the first camera module 205 (e.g., a camera module 180 of FIG. 1) is positioned. An opening may be formed in the area of the display 201, and the first camera module 205 (e.g., a punch hole camera) may be at least partially disposed in the opening to face the first surface 200A. In this case, the screen display area 201A may surround at least a portion of an edge of the opening. The first camera module 205 (e.g., an under display camera (UDC)) may be disposed under the display 201 to overlap the area of the display 201. In this case, the display 201 may provide the visual information to the user through the area, and additionally the first camera module 205 may obtain an image corresponding to a direction facing the first surface 200A through the area of the display 201.

The display 201 may be coupled to or disposed adjacent to a touch sensing circuit, a pressure sensor capable of measuring the intensity (pressure) of a touch, and/or a digitizer that detects a magnetic field-type stylus pen.

The audio modules 203, 204, and 207 (e.g., an audio module 170 of FIG. 1) may include microphone holes 203 and 204, and a speaker hole 207.

The microphone holes 203 and 204 may include a first microphone hole 203 formed in a partial area of the third surface 200C and a second microphone hole 204 formed in a partial area of the second surface 200B. A microphone (not shown) for obtaining external sound may be disposed inside the microphone holes 203 and 204. The microphone may include a plurality of microphones to detect the direction of sound.

In an example, the second microphone hole 204 formed in the partial area of the second surface 200B may be disposed adjacent to the camera modules 205, 212, and 213. For example, the second microphone hole 204 may obtain sound according to operations of the camera modules 205, 212, and 213. However, it is not limited thereto.

The speaker hole 207 may include an external speaker hole 207 and a receiver hole for call (not shown). The external speaker hole 207 may be formed on a portion of the third surface 200C of the electronic device 200. The external speaker hole 207 may be implemented as one hole with the microphone hole 203. Although not shown, the receiver hole for call (not shown) may be formed on another portion of the third surface 200C. For example, the receiver hole for call may be formed on the opposite side of the external speaker hole 207 on the third surface 200C. For example, based on the illustration of FIG. 2, the external speaker hole 207 may be formed on the third surface 200C corresponding to the lower end portion of the electronic device 200, and the receiver hole for call may be formed on the third surface 200C corresponding to the upper end portion of the electronic device 200. However, it is not limited thereto, and in another example, the receiver hole for call may be formed at a position other than the third surface 200C. For example, the receiver hole for call may be formed by a spaced space between the front plate 202 (or the display 201) and the side bezel structure 218.

The electronic device 200 may include at least one speaker (not shown) configured to output sound to the outside of the housing 230 through the external speaker hole 207 and/or the receiver hole for call (not shown).

The sensor module (not shown) (e.g., a sensor module 176 of FIG. 1) may generate an electrical signal or data value corresponding to an internal operating state or an external environmental state of the electronic device 200. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, and 213 (e.g., a camera module 180 of FIG. 1) may include the first camera module 205 disposed to face the first surface 200A of the electronic device 200, a second camera module 212 disposed to face the second surface 200B, and a flash 213.

The second camera module 212 may include a plurality of cameras (e.g., a dual camera, a triple camera, or a quad camera). However, the second camera module 212 is not necessarily limited to including the plurality of cameras, and may also include one camera.

The first camera module 205 and the second camera module 212 may include one or a plurality of lenses, an image sensor, and/or an image signal processor.

The flash 213 may include, for example, a light emitting diode or a xenon lamp. In another example, two or more lenses (infrared cameras, wide-angle and telephoto lenses) and image sensors may be disposed on one surface of the electronic device 200.

The key input device 217 (e.g., an input module 150 of FIG. 1) may be disposed on the third surface 200C of the electronic device 200. In another example, the electronic device 200 may not include some or all of the key input devices 217, and the key input device 217 that is not included may be implemented on the display 201 in another form such as a soft key.

The connector hole 208 may be formed on the third surface 200C of the electronic device 200 to accommodate the connector of an external device. A connecting terminal (e.g., a connecting terminal 178 of FIG. 1) electrically connected to a connector of the external device may be disposed in the connector hole 208. The electronic device 200 may include an interface module (e.g., interface 177 of FIG. 1) for processing the electrical signal transmitted and received through the connecting terminal.

The electronic device 200 may include the light emitting element (not shown). For example, the light emitting element (not shown) may be disposed on the first surface 200A of the housing 230. The light emitting element (not shown) may provide state information of the electronic device 200 in the form of light. In another example, the light emitting element (not shown) may provide a light source that interlocks with an operation of the first camera module 205. For example, the light emitting element (not shown) may include an LED, an IR LED, and/or the xenon lamp.

FIG. 3 is an exploded perspective view of an exemplary electronic device. One or more of the components illustrated in FIG. 3 and/or described in the following paragraphs may be implemented together with components illustrated in and/or described with references being made to FIG. 1-2, 4-8.

Hereinafter, redundant descriptions of a component having the same reference numerals as those described above will be omitted.

Referring to FIG. 3, the electronic device 200 may include a frame structure 240, a first printed circuit board 250, a second printed circuit board 252, a cover plate 260, and a battery 270.

The frame structure 240 may include a sidewall 241 forming an exterior (e.g., a third surface 200C of FIG. 2) of the electronic device 200 and a support portion 243 extending inward from the sidewall 241. The frame structure 240 may be disposed between a display 201 and a rear plate 211. The sidewall 241 of the frame structure 240 may surround a space between the rear plate 211 and a front plate 202 (and/or the display 201), and the support portion 243 of the frame structure 240 may extend from the sidewall 241 within the space.

The frame structure 240 may support or accommodate other components included in the electronic device 200. For example, the display 201 may be disposed on one surface of the frame structure 240 facing one direction (e.g., +z direction), and the display 201 may be supported by the support portion 243 of the frame structure 240. For another example, the first printed circuit board 250, the second printed circuit board 252, the battery 270, and a second camera module 212 may be disposed on the other surface facing the direction (e.g., -z direction) opposite to the one direction of the frame structure 240. The first printed circuit board 250, the second printed circuit board 252, the battery 270, and the second camera module 212 may be seated in recesses defined by the sidewall 241 and/or the support portion 243 of the frame structure 240, respectively.

The first printed circuit board 250, the second printed circuit board 252, and the battery 270 may be coupled to the frame structure 240, respectively. For example, the first printed circuit board 250 and the second printed circuit board 252 may be fixedly disposed on the frame structure 240 through a coupling member such as a screw. For example, the battery 270 may be fixedly disposed on the frame structure 240 through an adhesive member (e.g., double-sided tape). However, it is not limited by the above-described example.

The cover plate 260 may be disposed between the first printed circuit board 250 and the rear plate 211. The cover plate 260 may be disposed for example on the first printed circuit board 250. For example, the cover plate 260 may be disposed on a surface of the first printed circuit board 250 facing the -z direction.

The cover plate 260 may at least partially overlap the first printed circuit board 250 with respect to the z-axis. The cover plate 260 may cover at least a partial area of the first printed circuit board 250. Through this, the cover plate 260 may protect the first printed circuit board 250 from physical impact, or may prevent separation of a connector coupled to the first printed circuit board 250.

In an example, the cover plate 260 can be fixedly disposed on the first printed circuit board 250 through the coupling member (e.g., the screw), or may be coupled to the frame structure 240 together with the first printed circuit board 250 through the coupling member.

The display 201 may be disposed between the frame structure 240 and the front plate 202. For example, the front plate 202 may be disposed on one side (e.g., the +z direction) of the display 201, and the frame structure 240 may be disposed on the other side (e.g., the -z direction) of the display 201.

The front plate 202 may be coupled to the display 201. For example, the front plate 202 and the display 201 may be adhered to each other through an adhesive member for optics (e.g., optically clear adhesive (OCA) or optically clear resin (OCR)) interposed therebetween.

The front plate 202 may be coupled to the frame structure 240. For example, the front plate 202 may include an outer portion extending outside the display 201 when viewed in the z-axis direction and may adhere to the frame structure 240 through the adhesive member (e.g., the double-sided tape) disposed between the outer portion of the front plate 202 and the frame structure 240 (e.g., the sidewall 241). However, it is not limited by the above-described example.

In the first printed circuit board 250 and/or the second printed circuit board 252, a processor (e.g., a processor 120 of FIG. 1), a memory (e.g., a memory 130 of FIG. 1), and/or an interface (e.g., an interface 177 of FIG. 1) may be equipped. The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. The first printed circuit board 250 and the second printed circuit board 252 may be operatively or electrically connected to each other through a connecting member (e.g., a flexible printed circuit board).

The battery 270 (e.g., a battery 189 of FIG. 1) may supply power to at least one component of the electronic device 200. For example, the battery 270 may include a rechargeable secondary battery or a fuel cell. At least a portion of the battery 270 may be disposed on substantially the same plane as the first printed circuit board 250 and/or the second printed circuit board 252.

The electronic device 200 may include an antenna module (not shown) (e.g., an antenna module 197 of FIG. 1). The antenna module may be disposed between the rear plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power to and from the external device.

A first camera module 205 (e.g., a front camera) may be disposed on at least a portion (e.g., the support portion 243) of the frame structure 240 so that the lens may receive external light through a partial area (e.g., a camera area 237) of the front plate 202 (e.g., a front surface 200A of FIG. 2).

The second camera module 212 (e.g., a rear camera) may be disposed between the frame structure 240 and the rear plate 211. The second camera module 212 may be electrically connected to the first printed circuit board 250 through the connecting member (e.g., a connector). The second camera module 212 may be disposed so that the lens may receive the external light through a camera area 284 of the rear plate 211 of the electronic device 200.

The camera area 284 may be formed on a surface (e.g., a rear surface 200B of FIG. 2) of the rear plate 211. The camera area 284 may be formed to be at least partially transparent so that external light may be incident to the lens of the second camera module 212. At least a portion of the camera area 284 may protrude from the surface of the rear plate 211 to a predetermined height. However, it is not limited thereto, and in another example, the camera area 284 may form substantially the same plane as the surface of the rear plate 211.

A housing 230 of the electronic device 200 may mean the component or structure forming at least a portion of an exterior of the electronic device 200. In this respect, at least a portion of the front plate 202, the frame structure 240, and/or the rear plate 211 forming the exterior of the electronic device 200 may be referred to as the housing 230 of the electronic device 200.

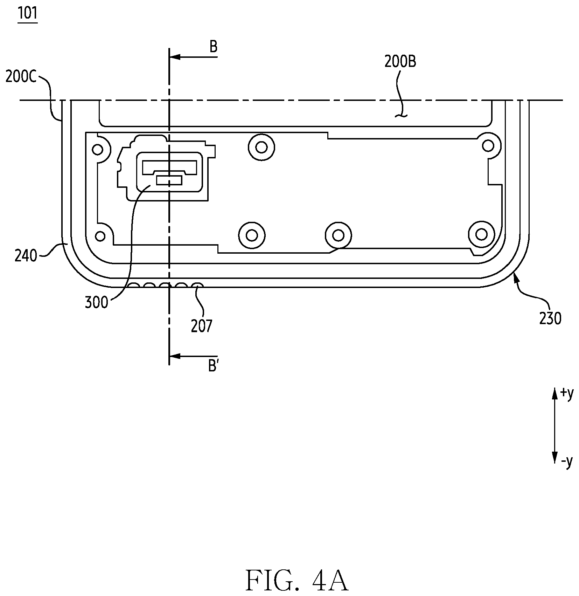

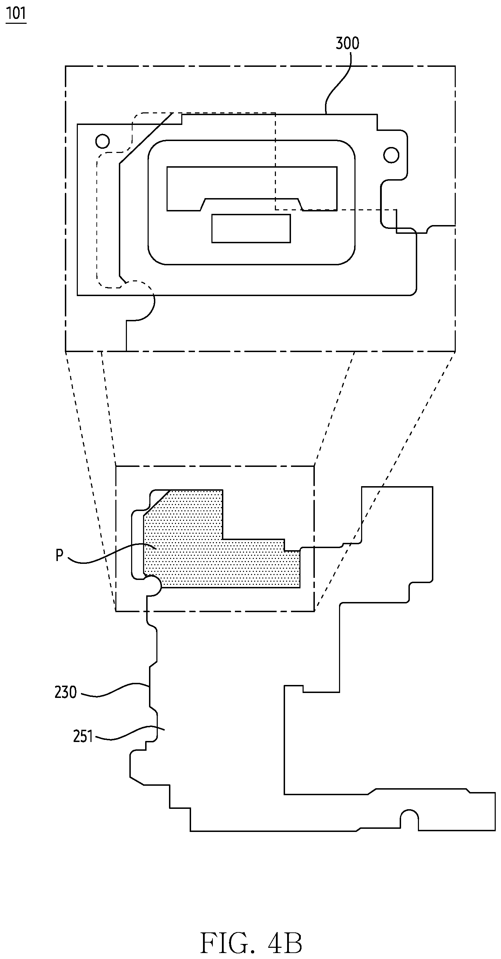

FIG. 4A shows a portion of the rear surface of an exemplary electronic device 101. FIG. 4B is a plan view of a printed circuit board 250 and a speaker module 300 of the exemplary electronic device 101. One or more of the components illustrated in FIG. 4A/4B and/or described in the following paragraphs may be implemented together with components illustrated in and/or described with references being made to FIG. 1-3, 5-8.

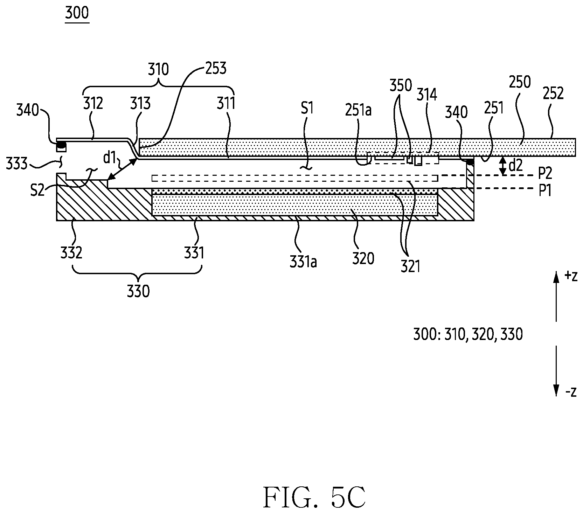

Referring to FIGS. 4A and 4B, the electronic device 101 may include at least one of a housing 230, the printed circuit board 250, a plate (e.g., a plate 310 of FIG. 5C), and the speaker module 300. FIG. 4A is a diagram in which a rear plate (e.g., a rear plate 211 of FIG. 2) of the electronic device 101 is omitted.

The housing 230 may form an exterior of the electronic device 101. The housing 230 may include a first surface (e.g., a first surface 200A of FIG. 2) and a second surface (e.g., a second surface 200B of FIG. 2) opposite to the first surface 200A. The housing 230 may form an internal space of the electronic device 101. Various components (e.g., a battery, a camera, and the printed circuit board 250) of the electronic device 101 may be disposed in the internal space formed by the housing 230. The housing 230 may be referred to as the housing 230 of FIG. 2.

The housing 230 may include a speaker hole 207. An audio signal generated inside the housing 230 may be emitted to the outside of the housing 230 through the speaker hole 207. The speaker hole 207 may be referred to as a sound passage through which the audio signal generated inside the housing 230 is emitted to the outside of the housing 230. The speaker hole 207 may be formed on a side surface of the housing 230, but is not limited thereto. For example, the speaker hole 207 may be formed on the side surface and/or the second surface 200B of the housing 230.

According to an example, the printed circuit board 250 may be disposed in the housing 230. The printed circuit board 250 may include a plurality of conductive layers and a plurality of non-conductive layers alternately laminated with the plurality of conductive layers. The printed circuit board 250 may provide electrical connection between the printed circuit board 250 and/or various electronic components disposed outside the printed circuit board 250 by using wires and conductive vias formed on the conductive layer.

The speaker module 300 may be configured to convert an electrical signal into an audio signal that is an analog signal. The speaker module 300 may include a speaker 320 configured to output the audio signal and a plate (e.g., the plate 310 of FIG. 5C) surrounding a speaker (e.g., the speaker 320 of FIG. 5C) and a case 330. Referring to FIG. 4B, the speaker module 300 may be disposed on one surface 251 of the printed circuit board 250. The speaker module 300 may occupy a partial area P of the printed circuit board 250. The speaker module 300 may be electrically connected to a processor (e.g., a processor 120 of FIG. 1) through the printed circuit board 250. For example, the processor may be configured to transmit a signal for requesting output of the audio signal to the speaker module 300 through the printed circuit board 250. The speaker 320 may be configured to output the audio signal based on receiving the signal from the processor. The output audio signal may be transmitted to the speaker hole 207 through a duct (e.g., a second space S2). The audio signal may be transmitted to the outside of the electronic device 101 through the speaker hole 207. According to an example, the speaker module 300 may be disposed close to the side surface of the housing 230 in which the speaker hole 207 is disposed so that the audio signal output from the speaker 320 may be transmitted to the speaker hole 207. For example, the speaker hole 207 may be disposed on the side surface of the -y direction of the housing 230. The speaker module 300 may be disposed close to the side surface of the -y direction of the housing 230. However, it is not limited thereto.

The case 330 includes a first body 331 and/or a second body 332. The first body 331 forms a first space S1 that is a space where the audio signal is output from the speaker 320. The second body 332 forms a second space S2 that is a space (e.g., the duct) for guiding the audio signal from the first space S1 to the speaker hole 207.

The plate 310 is connected to the case 330 to form an enclosure surrounding the speaker 320. A portion of the plate 310 (e.g., a first portion 311 of FIG. 5C) is in contact with one surface 251 of the printed circuit board 250, and the other portion of the plate 310 (e.g., a second portion 312 of FIG. 5C) forms a step with respect to the portion of the plate 310 (e.g., the first portion 311), as illustrated in FIG. 5C. For example, the portion and the other portion may be spaced apart relative to a direction, e.g., the z-direction as illustrated in FIG. 5C. The portion may be formed at a different position than the other portion with respect to the z-axis direction. The direction may be for example a direction in which a surface (e.g., the other surface 252 of FIG. 5C) opposite to the one surface 251 of the printed circuit board 250 faces. The structure resulting from the different placements/positions may be referred to a stepped structure. The other portion of the plate 310 may form the duct (e.g., the second space S2 of FIG. 5C) for guiding the audio signal to the speaker hole 207 together with the case 330.

A portion of the plate 310 forming the enclosure of the speaker module 300, by being in contact with one surface 251 of the printed circuit board 250, may secure an area of the duct to which the audio signal is transmitted, and may additionally dispose the electronic component on the partial area P of the printed circuit board 250 occupied by the speaker module 300. As the area of the duct is secured, the sound quality of the audio signal may be improved. As the electronic component is additionally disposed, the internal space of the electronic device 101 may be secured. Hereinafter, the above-described structure(s) will be described in detail with reference to the drawings.

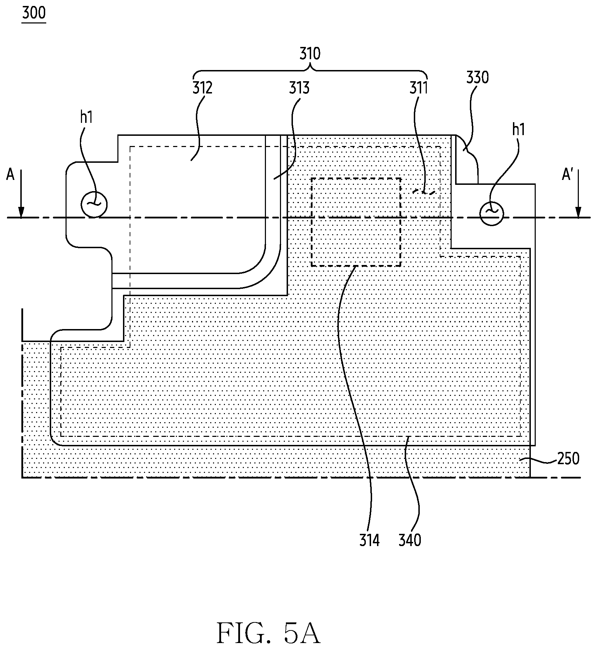

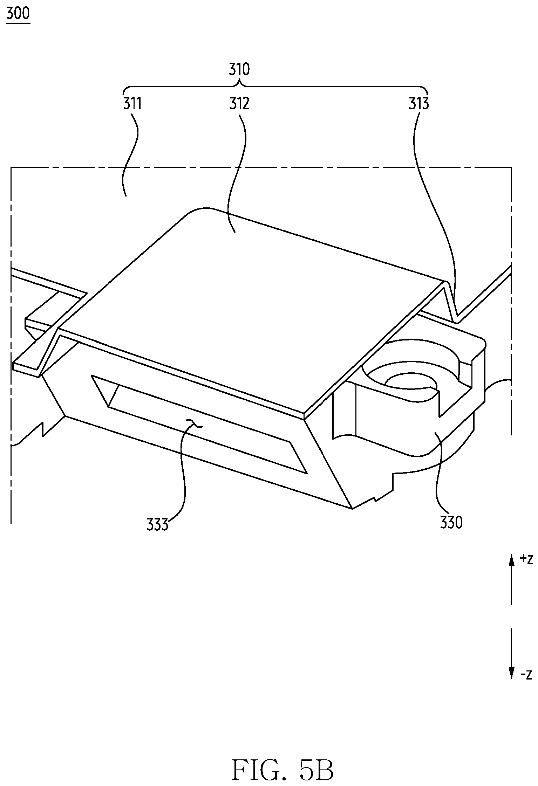

FIG. 5A shows a speaker module 330 of an exemplary electronic device 101. FIG. 5B is a diagram of the X area of FIG. 5A as viewed from the front. FIG. 5C is a cross-sectional view of an exemplary speaker module 330 cut along line A-A' of FIG. 5A. One or more of the components illustrated in FIG. 5A/5B/5C and/or described in the following paragraphs may be implemented together with components illustrated in and/or described with references being made to FIG. 1-4, 6-8.

Referring to FIGS. 5A to 5C, a speaker module 300 includes a plate 310, a speaker (e.g., a speaker 320 of FIG. 5C), a case 330, and/or a sealant (e.g., a sealant 340 of FIG. 5C). FIG. 5B is a diagram in which a printed circuit board 250 is omitted.

The plate 310 includes a first portion 311, a second portion 312, and a third portion 313. Referring to FIG. 5C, the first portion 311 contacts one surface (e.g., one surface 251 of FIG. 5C) of a printed circuit board (e.g., the printed circuit board 250 of FIG. 5C). For example, the first portion 311 may be in contact with one surface 251 of the printed circuit board 250 facing the -z direction. The second portion 312, with respect to the first portion 311, may be spaced apart, in a direction (e.g., the +z direction) in which the other surface (e.g., the other surface 252 of FIG. 5C) opposite to the one surface 251 of the printed circuit board 250 faces. For example, the first portion 311 and the second portion 312 may be disposed at different points with respect to the z-axis direction. The second portion 312 may extend toward a speaker hole (e.g., a speaker hole 207 of FIG. 4A). The third portion 313 may be disposed between the first portion 311 and the second portion 312. The second portion 312 may extend from the first portion 311 in a direction (e.g., the +z direction) toward the other surface 252. The plate 310 is divided into the first portion 311, the second portion 312, and the third portion 313 by being molded to protrude some areas from a plane. The plate 310 includes the first portion 311 formed of a plane, the second portion 312 formed of a plane spaced apart from the first portion, the third portion 313 disposed between the first portion 311 and the second portion 312. For example, the third portion 313 may protrude from the first portion 311. In order to smoothly connect the first portion 311 and the second portion 312, the third portion 313 has an inclination with respect to the first portion 311.

Referring to FIG. 5C, the speaker 320 may be configured to output an audio signal. For example, the speaker 320 may include a diaphragm 321, at least one voice coil providing vibration to the diaphragm 321, and a magnet capable of forming a magnetic field. When a current having audio information flows through the voice coil, the diaphragm 321 may vibrate. The speaker 320 may be configured to output the audio signal based on the vibration of the diaphragm 321.

The case 330 may surround at least a portion of the speaker 320 to support the speaker 320. For example, the case 330 may include a support portion 331a supporting at least a portion of a surface of the speaker 320 facing the -z direction and at least a portion of a side surface of the speaker 320. The speaker 320 may be inserted into the support portion 331a. However, it is not limited thereto.

The case 330 may be connected to the first portion 311 to form a first space S1. The first space S1 may be a space between the surface of the speaker 320 facing the +z direction and the plate 310. The audio signal output from the speaker 320 may be output to the first space S1. For example, as air in the first space S1 is vibrated by the diaphragm 321, the audio signal may be output.

The case 330 may be connected to the second portion 312 to form a second space S2. The second space S2 may be a duct for guiding an output audio signal from the first space S1 to the speaker hole (e.g., the speaker hole 207 of FIG. 4A). The second space S2 may be connected to the first space S1. The audio signal output from the speaker 320 may be transmitted to the audio hole through the first space S1 and the second space S2.

The case 330 may include a first body 331 and a second body 332. The first body 331 may include the support portion 331a for supporting the speaker 320. The first body 331 may be connected to the first portion 311 to define the first space S1. For example, the first space S1 may be defined by the first portion 311, the first body 331, and the speaker 320, but is not limited thereto. The second body 332 may include a through hole 333 connecting the second space S2 and the speaker hole (e.g., the speaker hole 207 of FIG. 4A). The audio signal may be transmitted to the audio hole through the through hole 333. The second body 332 may be connected to the second portion 312 to define the second space S2. For example, the second space S2 may be defined by the second portion 312 and the second body 332, but is not limited thereto.

The second space S2 may be formed at a different position from the first space S1 with respect to the z-axis direction. For example, the second portion 312 may be stepped with respect to the first portion 311. The second body 332 may be stepped with respect to the first body 331. For example, the second body 332 may be spaced apart from the first body 331 in the +z direction. As the electronic device 101 is miniaturized, the internal space of the housing 230 may be limited. The speaker module 300 may efficiently use the internal space of the housing 230 through the stepped structure. Referring to FIG. 5C, due to the structure in which the speaker module 300 is stacked with at least a portion of the printed circuit board 250, the speaker module 300 and the speaker hole (e.g., the speaker hole 207 of FIG. 4A) may not be disposed on the same plane. As the second body 332 is stepped with respect to the first body 331, the through hole 333 connected to the second space S2 may be disposed on the same plane as the speaker hole 207.

The area of the second space S2, which is a path through which the audio signal is transmitted to the speaker hole 207, may affect the quality of the audio signal. For example, in case that the area of the partial area of the second space S2 is small, the quality of a high-pitched audio signal having a relatively high frequency may be degraded. Since the high-pitched audio signal has a high frequency, it may have a short wavelength. The short wavelength high-pitched audio signal may have weak diffraction. In case that the area of the partial area of the second space S2 is small, the high-pitched audio signal may not pass through the second space S2, and thus the sound pressure level (SPL) of the speaker module 300 may be degrade in a relatively high frequency band.

According to an example, the plate 310 and the case 330 may form an enclosure surrounding the speaker 320. Since the first portion 311 of the plate 310 may be in contact with one surface 251 of the printed circuit board 250, a gap between the plate 310 and the printed circuit board 250 may be removed. For example, the first portion 311 may be soldered to the one surface 251 of the printed circuit board 250. Since the first portion 311 is in contact with one surface 251 of the printed circuit board 250, a distance between the plate 310 and the case 330 may be increased. For example, a distance d1 between the third portion 313 and the second body 332 may be increased as the first portion 311 contacts one surface 251 of the printed circuit board 250.

The minimum distance between the plate 310 and the case 330 may correspond to the minimum distance d1 between the second body 332 and the third portion 313. The second portion 312 may be stepped with respect to the first portion 311, and the second body 332 may be stepped with respect to the first body 331. The second space S2 may be narrowed in a portion corresponding to the stepped structure. An area of a portion corresponding to the stepped structure may have a minimum area in the second space S2.

As the first portion 311 contacts one surface 251 of the printed circuit board 250, a gap between the plate 310 and the printed circuit board 250 may be removed. As the gap is removed, the distance d1 between the third portion 313 and the second body 332 may be increased. As a consequence of the distance d1 being increased, the area of the portion corresponding to the stepped structure in the second space S2 may be increased, so that the quality of the audio signal can be improved.

In order to increase the distance d1, the third portion 313 may contact the corner of an end 253 close to the second portion 312 of both ends of the printed circuit board 250. For example, the distance d1 between the second body 332 and the third portion 313 in case that the third portion 313 contacts the corner of the end 253 of the printed circuit board 250 may be longer than the distance d1 between the second body 332 and the third portion 313 in case that the third portion 313 is spaced apart from the end 253 of the printed circuit board 250. In an example, as the distance d1 increases, the minimum area in the second space S2 may increase, and thus the quality of the audio signal may be improved.

Referring to FIGS. 5A and 5C, the first portion 311 may include an opening 314. The opening 314 may expose a portion 251a of one surface 251 of the printed circuit board 250 to the first space S1. In FIG. 5A, the first portion 311 is illustrated as including one opening 314, but the number of the opening 314 is not limited. For example, the first portion 311 may include two or more openings 314 spaced apart from each other.

The portion 251a of the printed circuit board 250 may be exposed to the first space S1 through the opening 314. The portion 251a of the printed circuit board 250 may be an area corresponding to the opening 314 among a partial area of the printed circuit board 250 (e.g., a partial area P of FIG. 4B) occupied by the speaker module 300. The electronic device 101 may further include at least one electronic component 350 connected to the portion 251a of the printed circuit board 250 exposed through the opening 314. One or more of the at least one electronic component 350 may be positioned and/or may be functionally distinct from the speaker module 300. The at least one electronic component 350 may be disposed on the portion 251a of the printed circuit board 250.

The at least one electronic component 350 may occupy a portion of the first space S1. The at least one electronic component 350 may be connected to the portion 251a of the printed circuit board 250 and may be disposed in the first space S1 between the speaker 320 and the first portion 311. According to an example, since at least one electronic component 350 distinct from the speaker module 300 may be disposed in the partial area (e.g., the partial area P of FIG. 4B) of the printed circuit board 250 occupied by the speaker module 300, space in the housing 230 may be secured and/or saved, e.g. for other components of the electronic device 101, or for providing an improved sound output.

The at least one electronic component 350 distinct from the speaker module 300 may be connected to the printed circuit board 250 through the portion 251a of the printed circuit board 250 exposed through the opening 314 of the first portion 311. For example, when the at least one electronic component 350 is connected to the partial area (e.g., the partial area P of FIG. 4B) of the printed circuit board 250 occupied by the speaker module 300, the printed circuit board 250 may be electrically connected to more electronic components. Since the thickness of the plate 310 (e.g., about 0.2 mm) may be relatively thin, the speaker module 300 may secure a space that may be occupied by the at least one electronic component 350 between the plate 310 and the speaker 320.

The speaker 320 may include the diaphragm 321. The diaphragm 321 may be vibrated by the magnet and/or the voice coil. The diaphragm 321 may generate the audio signal through the vibration. The diaphragm 321 may be configured to vibrate in a first direction (e.g., the +z direction) toward one surface 251 of the printed circuit board 250 and a second direction (e.g., the -z direction) opposite to the first direction. When the diaphragm 321 vibrates, the position of the diaphragm 321 may change within the first space S1. For example, the position of the diaphragm 321 may change from a first position P1, which is a position before vibrating, to a second position P2. The second position P2 may be a maximum movement position of the diaphragm 321 in the first direction. In case that the diaphragm 321 and the at least one electronic component 350 contact each other, noise may be generated due to the contact. In the first space S1, the space occupied by the at least one electronic component 350 may be limited based on the position of the diaphragm 321. The length of the at least one electronic component 350 in the second direction may be less than a distance d2 between one surface 251 of the printed circuit board 250 and the second position P2, which is the maximum movement position of the diaphragm 321 in the first direction. For example, in case that the distance from one surface 251 to the first position P1 is about 1.1mm and the distance from the first position P1 to the second position P2 is about 0.45mm, the length of the at least one electronic component 350 in the second direction may be less than about 0.65mm. For example, in case that a gap for the at least one electronic component 350 and the second position P2 is added by 0.1mm, the length of the at least one electronic component 350 in the second direction may be less than about 0.55mm. In case that the length of the at least one electronic component 350 in the second direction is greater than or equal to the distance d2, when the diaphragm 321 vibrates, the diaphragm 321 and the at least one electronic component 350 may contact each other. The length of the at least one electronic component 350 in the second direction may be limited to less than the distance d2 to prevent the contact.

The electronic device 101 may further include the sealant 340 disposed between the plate 310 and the case 330. The sealant 340 may be disposed along a circumference around which the plate 310 and the case 330 contact each other. For example, the sealant 340 may be disposed between the first body 331 and the first portion 311 and between the second body 332 and the second portion 312. The sealant 340 may separate the first space S1 and the second space S2 from other space in the housing 230. The sealant 340 may prevent the audio signal from leaking to the internal space of the housing 230 by sealing the space to which the audio signal is transmitted.

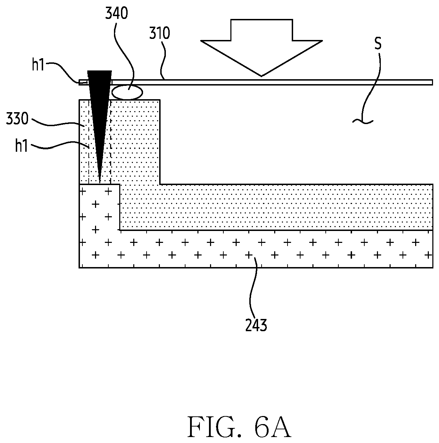

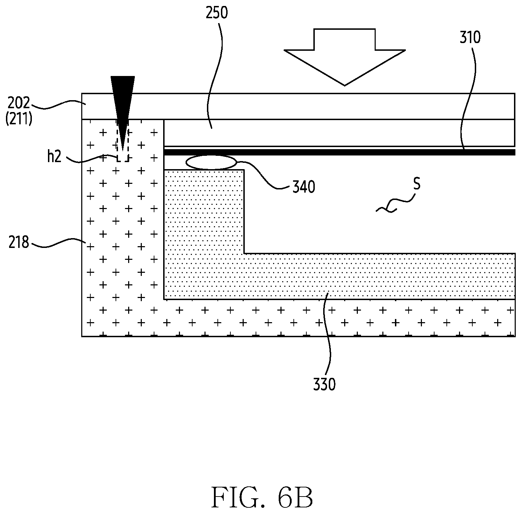

FIG. 6A schematically shows an exemplary connection state between a plate 310 and a case 330, of a speaker module 300. FIG. 6B schematically shows an exemplary connection state between the plate 310 of a housing 230 and a side bezel member 218. One or more of the components illustrated in FIG. 6A/6B and/or described in the following paragraphs may be implemented together with components illustrated in and/or described with references being made to FIG. 1-5, 7-8.

Referring to FIG. 5A again, a sealant 340 may be disposed along a circumference around which the plate 310 and the case 330 contact each other. The sealant 340 may be made of a flexible material. For example, the sealant 340 may include a rubber, a poron, a sponge, or urethane that may be compressed based on an external force when pressed by the external force, but is not limited thereto. The sealant 340 may be compressed by a coupling force for coupling the plate 310 and the case 330. The sealing member 340 may isolate the space (e.g., a space S of FIG. 6A or a space S of FIG. 6B) between the plate 310 and the case 340 from other space by sealing the space between the plate 310 and the case 330.

The sealant 340 may be compressed by the coupling force between the plate 310 and the case 330. Referring to FIG. 6B, the speaker module 300 may include a connecting portion for connecting the plate 310 and the case 330. For example, the connecting portion may include a first hole h1 penetrating the plate 310 and the case 330 and to which a screw may be connected. The plate 310 and the case 330 may be screwed to each other through the screw coupled to the first hole h1. The screw may be inserted into the first hole h1 of the plate 310 and may be connected to the first hole h1 of the case 330. By being screwed, the coupling force may be provided between the plate 310 and the case 330. By being screwed, the external force from the plate 310 toward the case 330 may be applied to the sealant 340. The sealant 340 may be compressed by the coupling force between the plate 310 and the case 330. The sealant 340 may be configured to seal the space S between the plate 310 and the case 330 by being compressed by the coupling force.

Referring to FIG. 6B, the sealant 340 may be compressed by the coupling force between the plate 310 of the housing 230 and the case 330. The housing 230 may include at least one of a first plate 202, a second plate 211 opposite to the first plate 202, and the side bezel member 218 between the first plate 202 and the second plate 211. For example, the first plate 202 may form a first surface of the housing 230. A second plate 211 may form the second surface of the housing 230. However, it is not limited thereto. The first plate 202, the second plate 211, and the side bezel member 218 may form an exterior of the housing 230 by being coupled to each other. For example, the first plate 202 and the second plate 211 may be screwed to the side bezel member 218, but is not limited thereto. For example, the screw may be inserted into a second hole h2 of the side bezel member 218 formed outside the speaker module 300. The screw may penetrate the first plate 202 and/or the second plate 211 and may be connected to the second hole h2 of the side bezel member 218. By being screwed, the coupling force may be provided between the first plate 202 and/or the second plate 211 and the side bezel member 218. By being screwed, the coupling force from the first plate 202 and/or the second plate 211 toward the side bezel member 218 may be transmitted to the plate 310 and the case 330 through a printed circuit board 250. The sealant 340 may be compressed by the coupling force between the first plate 202 and/or the second plate 211 and the side bezel member 218. The sealant 340 may be configured to seal the space S between the plate 310 and the case 330 by being compressed by the coupling force.

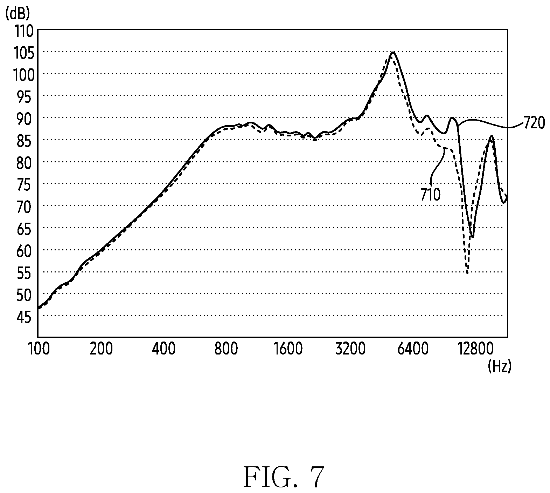

FIG. 7 is a graph showing a change in a sound pressure level of an audio signal output from an electronic device. A horizontal axis of the graph of FIG. 7 is a frequency (unit: Hz), and a vertical axis of the graph is a sound pressure level (SPL) (unit: dB) of transmitted to the outside of a housing (e.g., a housing 230 of FIG. 4A). One or more of the components described in the following paragraphs may be implemented together with components illustrated in and/or described with references being made to FIG. 1-6, 8.

A first graph 710 of FIG. 7 represents the sound pressure level of the audio signal output from the electronic device including a speaker module not including a plate. For example, the speaker module may include an injection molded enclosure, and the enclosure may be disposed on a printed circuit board. A second graph 720 of FIG. 7 represents the sound pressure level of the audio signal output from an electronic device (e.g., an electronic device 101 of FIG. 4A) according to the present description, e.g., the electronic device 101 including the speaker module (e.g., a speaker module 300 of FIG. 5C) including the plate (e.g., a plate 310 of FIG. 5C) that is in contact with the printed circuit board (e.g., a printed circuit board 250 of FIG. 5C).

A speaker (e.g., a speaker 320 of FIG. 5C) may output the audio signal through vibration within a limited space. The audio signal may form a standing wave or progressive wave in which the incident wave and the reflected wave are synthesized with each other. A portion of the audio signal output from the speaker 320 may be reinforced or offset each other by overlapping the reflected wave reflected by the structure in the space. For example, the standing wave or progressive wave may have a peak or Dip at a specific frequency. The frequency of the dip point of the standing wave or progressive wave may be referred to as the dip frequency.

Referring to FIG. 7, the first graph 710 and the second graph 720 may not show a relatively large difference in a low-pitched audio signal. At a frequency of about 2,000 Hz or more, the second graph 720 may have a higher SPL than the first graph 710. At a frequency of about 5,000 Hz or more, the first graph 710 may have a low SPL. Since the audio signal of a high frequency has weak diffraction, it may not pass well through a duct of a narrow path. The SPL of the first graph 710 may have the low SPL at a relatively high frequency. The second graph 720 may have a relatively high SPL at the high frequency. Referring to FIG. 7, it may be seen that in a frequency range of about 6,000 Hz to about 12,000 Hz, the SPL of the second graph 720 is up to about 7 dB higher than the SPL of the first graph 710. In the electronic device 101 according to an example of the present description, since the plate 310 contacts the printed circuit board 250, a space between the plate 310 and a case 330 may be expanded. According to an example of the present description, an area of a space (e.g., a second space (e.g., a second space S2 of FIG. 5C)) in which the audio signal is transmitted to a speaker hole (e.g., a speaker hole 207 of FIG. 4A)) may be expanded. When the area is expanded, the SPL of the high-pitched audio signal may be improved.

The first graph 710 may have the dip frequency of about 12,500 Hz. The second graph 720 may have the dip frequency of about 13,500 Hz. The dip frequency of the standing wave or progressive wave may be determined based on the area of the space. According to an example of the present description, as the area of the space in which the audio signal is transmitted is secured, the dip frequency may be increased by about 1,000 Hz or more. Since the speaker module 300 may have a relatively high dip frequency, the range of the audio signal that may be provided may be extended, e.g., to a mainly used frequency range or a frequency range that is used more frequently. For example, in case that the speaker 320 substantially outputs the high-pitched audio signal of about 12,000 Hz, the speaker module 300 having a dip frequency of 13,500 Hz may provide the audio signal of up to about 12,000 Hz.

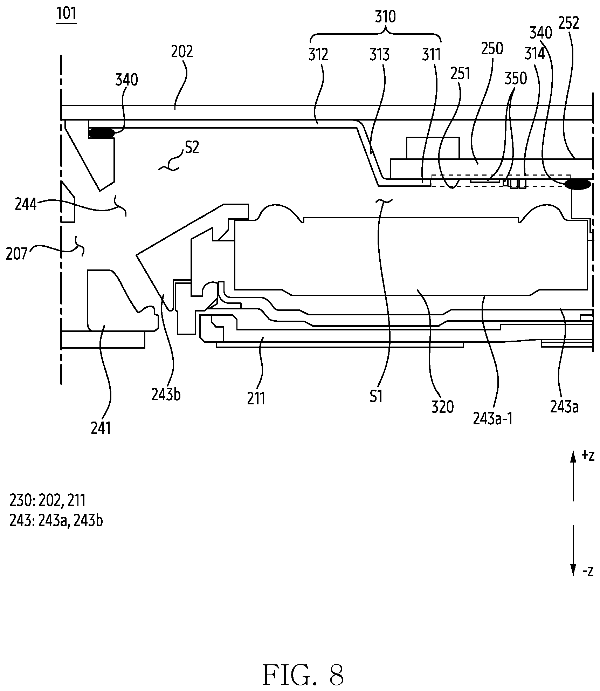

FIG. 8 is a cross-sectional view of an exemplary electronic device 101 cut along B-B' of FIG. 4A. One or more of the components illustrated in FIG. 8 and/or described in the following paragraphs may be implemented together with components illustrated in and/or described with references being made to FIG. 1-7.

Referring to FIG. 8, the electronic device 101 may include a housing 230, a printed circuit board 250, a plate 310, and a speaker 320. The electronic device 101 illustrated in FIG. 8 may be substantially the same as the electronic device 101 described with reference to FIGS. 1 to 7, except that for example a case (e.g., a case 330 of FIG. 5C) forming an enclosure surrounding the speaker 320 is replaced with the plate 310 of the housing 230. Hereinafter, the same component is described with the same reference numeral, and a redundant description is excluded.

The housing 230 may form an exterior of the electronic device 101. For example, the housing 230 may include a first plate 202 and a second plate 211 opposite to the first plate 202. The housing 230 may include a speaker hole 207 and a support portion 243. The support portion 243 may support at least a portion of the components of the electronic device 101. The support portion 243 may extend inward from a sidewall (e.g., a sidewall 241 of FIG. 3) forming a side surface of the housing 230. The support portion 243 may be referred to as the support portion 243 of FIG. 3. The support portion 243 may be disposed between the first plate 202 and the second plate 211.

The printed circuit board 250 may be disposed in the housing 230. The plate 310 may include a first portion 311 in contact with one surface 251 of the printed circuit board 250, a second portion 312 spaced apart from the first portion 311 in the direction (e.g., the +z direction) in which the other surface 252 of the printed circuit board 250 opposite to the one surface 251 faces and extending toward the speaker hole 207 of the housing 230, and a third portion 313 disposed between the first portion 311 and the second portion 312. The second portion 312 may be stepped with respect to the first portion 311. For example, the second body 332 may be spaced apart from the first body 331 in the +z direction.

The speaker 320 may be configured to output the audio signal. The speaker 320 may be supported by the support portion 243.

The support portion 243 may surround at least a portion of the speaker 320 to support the speaker 320. The support portion 243 may be connected to the first portion 311 to form a first space S1 in which the audio signal is output. The support portion 243 may be connected to the second portion 312 to form a second space S2 guiding the audio signal from the first space S1 to the speaker hole 207. The support portion 243 may include a first body 243a and a second body 243b. The first body 243a may include a support portion 243a-1 supporting the speaker 320. The second body 243b may include a through hole 244 connecting the second space S2 and the speaker hole 207. The second body 243b may be connected to the second portion 312. The second body 243b may be stepped with respect to the first body 243a.

The first portion 311 may include an opening 314 exposing a portion 251a of one surface 251 of the printed circuit board 250 to the first space S1. The electronic device 101 may further include at least one electronic component 350 connected to the portion 251a of the printed circuit board 250 exposed through the opening 314. The at least one electronic component 350 may occupy the first space S1 between the speaker 320 and the printed circuit board 250. Since the at least one electronic component 350 may be connected to the printed circuit board 250 through the opening 314, the printed circuit board 250 may provide electrical connection to the electronic component distinct from the speaker 320. The portion 251a of the printed circuit board 250 may be exposed to the first space S1 through the opening 314. The portion 251a of the printed circuit board 250 may be an area corresponding to the opening 314 among an area of the printed circuit board 250 occupied by a speaker module 300. The electronic device 101 may further include the at least one electronic component 350 connected to the portion 251a of the printed circuit board 250 exposed through the opening 314. The at least one electronic component 350 may be at least one of components distinct from the speaker module 300. At least one electronic component 350 may be disposed on the portion 251a of the printed circuit board 250.

The at least one electronic component 350 distinct from the speaker module 300 may be connected to the printed circuit board 250 through the portion 251a of the printed circuit board 250 exposed through the opening 314 of the first portion 311. Since the at least one electronic component 350 may be connected to the area of the printed circuit board 250 occupied by the speaker module 300, the printed circuit board 250 may be electrically connected to more electronic components. Since the thickness of the plate 310 (e.g., about 0.2 mm) may be relatively thin, the speaker module 300 may secure a space that may be occupied by the at least one electronic component 350 between the plate 310 and the speaker 320.

The electronic device 101 may further include a sealant 340. The sealant 340 may be disposed between the support portion 243 and the plate 310. The sealant 340 may seal the first space S1 and the second space S2. The first space S1 and the second space S2 may be isolated from other space in the housing 230 through the sealant 340. The sealant 340 may prevent the audio signal from leaking to the internal space of the housing 230 by sealing the space to which the audio signal is transmitted.

The plate 310 may surround the speaker 320 together with a structure (e.g., the support portion 243) inside the housing 230. Without the separate case 330 for the speaker 320, the minimum area of the second space S2 for the quality of a high-pitched audio signal may be secured by using the support portion 243 in the housing 230. The plate 310 may secure the minimum area of the second space S2 by contacting the printed circuit board 250 and extending toward the audio hole. Accordingly, the quality of the audio signal output from the speaker 320 may be improved.

Various examples illustrated and/or described in the present disclosure may sufficiently secure a transmission space of the audio signal output from a speaker through a plate in contact with the printed circuit board. However, the present disclosure is not limited to the above-described content.

The electronic device may be and/or include one of various types of devices. The electronic device may be and/or include, for example, a portable communication device (e.g., a smartphone), a computer device, a portable multimedia device, a portable medical device, a camera, a wearable device, or a home appliance. The electronic device to the present document is not limited to the above-described devices.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "first", "second", or "second", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

Various embodiments of the present document may be implemented as software (e.g., a program) including one or more instructions stored in a storage medium (or external memory) readable by a device (e.g., wearable device 100). For example, a processor (e.g., a processor) of a device (e.g., wearable device 100) may call and execute at least one of the one or more instructions stored from a storage medium. This makes it possible for the device to operate to perform at least one function according to at least one command called. The one or more instructions may include code generated by a compiler or code that may be executed by an interpreter. The device-readable storage medium may be provided in the form of a non-transitory storage medium. Here, the term 'non-transitory' only means that a storage medium is a device that is tangible and does not include a signal (e.g., electromagnetic wave), and the term does not distinguish between a case where data is semi-permanently stored and a case where it is temporarily stored.

A method may be provided by being included in a computer program product. The computer program products may be traded between sellers and buyers as products. The computer program products may be distributed in the form of device-readable storage media (e.g., compact disc read only memory (CD-ROM), or distributed (e.g., downloaded or uploaded) directly or online through an application store (e.g., Play Store^{™}) or between two user devices (e.g., smartphones). In the case of online distribution, at least some of the computer program products may be temporarily stored or temporarily created on a device-readable storage medium such as a manufacturer's server, a server in an application store, or a memory in a relay server.

Each of the above-described components (e.g., a module or a program) may include a single object or a plurality of objects, and some of the plurality of objects may be separated and disposed in other components. According to various embodiments, one or more components or operations of the above-described corresponding components may be omitted, or one or more other components or operations may be added. Alternatively, or additionally, a plurality of components (e.g., modules or programs) may be integrated into one component. In this case, the integrated component may perform one or more functions of each of the components in the same or similar manner as those performed by the corresponding component among the plurality of components before the integration. According to various embodiments, operations performed by a module, a program, or other components may be executed sequentially, in parallel, repeatedly, or heuristic, performed in a different order, omitted, or one or more other operations may be added.

## Claims

1. An electronic device (101) comprising:
a housing (230) comprising a speaker hole (207);
a printed circuit board, PCB, (250) disposed in the housing (230); and
a speaker module (300), stacked with at least portion of the PCB, comprising a speaker (320) and an enclosure surrounding the speaker (320),
wherein the enclosure of the speaker module (300) comprises:
a case (330), supporting the speaker (320), and
a plate (310) comprising:
a first horizontal portion (311), contacted with one surface (251) of the PCB (250) facing the speaker (320),
a second horizontal portion (312), spaced apart from the one surface of the PCB (250)
a third inclined portion (313) connecting the first portion (311) of the plate (310) and the second portion (312) of the plate (310),
wherein a first portion (331) of the case (330) and the first horizontal portion (311) of the plate (310) forms a first audio path (S1) between the speaker (320) and the plate (310), and
wherein a second portion (332) of the case (330) and the second horizontal portion (313) of the plate (310) forms a second audio path (S2) connecting the first audio path (S1) to the speaker hole (207) of the housing (230).

2. The electronic device (101) of claim 1, wherein the third inclined portion (313) of the plate (310) is contacted with an edge of an end (253) of the PCB (250) close to the second horizontal portion (312) of the plate (310) of both ends of the PCB (250).

3. The electronic device (101) of claim 1, wherein the first horizontal portion (311) of the plate (310) comprises an opening (314) exposing a portion(251a) of the one surface (251) of the PCB (250) to the first audio path (S1), and
wherein the electronic device (101) further comprises at least one electronic component (350) connected to the portion (251a) of the PCB (250) exposed through the opening (314).

4. The electronic device (101) of claim 3, wherein the at least one electronic component (350) occupies a portion of the first audio path (S1).

5. The electronic device (101) of claim 4, wherein the speaker (320) comprises a diaphragm (321) configured to vibrate in a first direction toward the one surface (251) and in a second direction opposite to the first direction, and
wherein a length of the at least one electronic component (350) in the second direction is smaller than a distance between the one surface (251) of the PCB (250) and a maximum movement position (P2) of the diaphragm (321) in the first direction.

6. The electronic device (101) of claim 1, wherein the third inclined portion (313) of the plate (310) has an inclination with respect to the first horizontal portion (311) of the plate (310).

7. The electronic device (101) of claim 1, wherein a distance between the third inclined portion (313) of the plate (310) and the case (330) is increased by the first horizontal portion (311) of the plate (310) being configured so as to contact the PCB (250).

8. The electronic device (101) of claim 1, wherein the first horizontal portion (311) of the plate (310) is soldered to the one surface (251) of the PCB (250).

9. The electronic device (101) of claim 1, wherein the first portion (331) of the case (330) connected to the first horizontal portion (311) of the plate (310) and comprising a support portion (331a) supporting the speaker (320) and,
wherein the second portion (332) of the case (330) connected to the second horizontal portion (312) of the plate (310) and comprising a through hole (333) connecting the second audio path (S2) and the speaker hole (207), and
wherein the second portion (332) of the case (330) is stepped with respect to the first portion (331) of the case (330).

10. The electronic device (101) of claim 9, wherein a minimum distance between the plate (310) and the case (330) corresponds to a minimum distance between the second portion (332) of the case (330) and the third inclined portion (313) of the plate (310).

11. The electronic device (101) of claim 1, further comprising a sealant (340) disposed between the plate (310) and the case (330), and
wherein the sealant (340) seals the first audio path (S1) and the second audio path (S2).

12. The electronic device (101) of claim 11, wherein the sealant (340) comprises a flexible material.

13. The electronic device (101) of claim 12, wherein the plate (310) and the case (330) are screwed, and
wherein the sealant (340) is compressed by the coupling force between the plate (310) and the case (330).

14. The electronic device (101) of claim 12, wherein the housing (230) comprises a first plate (202), a second plate (211) opposite to the first plate (202), and a side bezel member (218) surrounding a space between the first plate (202) and the second plate (211), and
wherein the sealant (340) is compressed by the coupling force between the first plate (202) or the second plate (211), and the side bezel member (218).

## Patentansprüche

1. Elektronische Vorrichtung (101), die Folgendes umfasst:
ein Gehäuse (230), das eine Lautsprecheröffnung (207) umfasst;
eine Leiterplatte, PCB, (250), die in dem Gehäuse (230) angeordnet ist; und
ein Lautsprechermodul (300), das mit zumindest einem Teil der PCB gestapelt ist, das einen Lautsprecher (320) und ein Gehäuse umfasst, das den Lautsprecher (320) umgibt,
wobei das Gehäuse des Lautsprechermoduls (300) Folgendes umfasst:
ein Gehäuse (330), das den Lautsprecher (320) trägt, und
eine Platte (310), die Folgendes umfasst:
einen ersten horizontalen Abschnitt (311), der mit einer Oberfläche (251) der PCB (250) in Kontakt steht, die dem Lautsprecher (320) zugewandt ist,
einen zweiten horizontalen Abschnitt (312), der von der einen Oberfläche der PCB (250) beabstandet ist,
einen dritten geneigten Abschnitt (313), der den ersten Abschnitt (311) der Platte (310) und den zweiten Abschnitt (312) der Platte (310) verbindet,
wobei ein erster Abschnitt (331) des Gehäuses (330) und der erste horizontale Abschnitt (311) der Platte (310) einen ersten Audiopfad (S1) zwischen dem Lautsprecher (320) und der Platte (310) bilden, und
wobei ein zweiter Abschnitt (332) des Gehäuses (330) und der zweite horizontale Abschnitt (313) der Platte (310) einen zweiten Audiopfad (S2) bilden, der den ersten Audiopfad (S1) mit der Lautsprecheröffnung (207) des Gehäuses (230) verbindet.

2. Elektronische Vorrichtung (101) nach Anspruch 1, wobei der dritte geneigte Abschnitt (313) der Platte (310) mit einer Kante eines Endes (253) der PCB (250) in der Nähe des zweiten horizontalen Abschnitts (312) der Platte (310) an beiden Enden der PCB (250) in Kontakt steht.

3. Elektronische Vorrichtung (101) nach Anspruch 1, wobei der erste horizontale Abschnitt (311) der Platte (310) eine Öffnung (314) umfasst, die einen Abschnitt (251a) der einen Oberfläche (251) der PCB (250) dem ersten Audiopfad (S1) freigibt, und
wobei die elektronische Vorrichtung (101) ferner mindestens eine elektronische Komponente (350) umfasst, die mit dem durch die Öffnung (314) freiliegenden Abschnitt (251a) der PCB (250) verbunden ist.

4. Elektronische Vorrichtung (101) nach Anspruch 3, wobei die mindestens eine elektronische Komponente (350) einen Teil des ersten Audiopfads (S1) einnimmt.

5. Elektronische Vorrichtung (101) nach Anspruch 4, wobei der Lautsprecher (320) eine Membran (321) umfasst, die konfiguriert ist, um in eine erste Richtung in Richtung der einen Oberfläche (251) und in eine zweite Richtung entgegen der ersten Richtung zu vibrieren, und
wobei eine Länge der mindestens einen elektronischen Komponente (350) in der zweiten Richtung kleiner als ein Abstand zwischen der einen Oberfläche (251) der PCB (250) und einer maximalen Bewegungsposition (P2) der Membran (321) in der ersten Richtung ist.

6. Elektronische Vorrichtung (101) nach Anspruch 1, wobei der dritte geneigte Abschnitt (313) der Platte (310) eine Neigung in Bezug auf den ersten horizontalen Abschnitt (311) der Platte (310) aufweist.

7. Elektronische Vorrichtung (101) nach Anspruch 1, wobei ein Abstand zwischen dem dritten geneigten Abschnitt (313) der Platte (310) und dem Gehäuse (330) dadurch vergrößert wird, dass der erste horizontale Abschnitt (311) der Platte (310) konfiguriert ist, um die PCB (250) zu berühren.

8. Elektronische Vorrichtung (101) nach Anspruch 1, wobei der erste horizontale Abschnitt (311) der Platte (310) mit der einen Oberfläche (251) der PCB (250) verlötet ist.

9. Elektronische Vorrichtung (101) nach Anspruch 1, wobei der erste Abschnitt (331) des Gehäuses (330) mit dem ersten horizontalen Abschnitt (311) der Platte (310) verbunden ist und einen Stützabschnitt (331a) umfasst, der den Lautsprecher (320) trägt, und
wobei der zweite Abschnitt (332) des Gehäuses (330) mit dem zweiten horizontalen Abschnitt (312) der Platte (310) verbunden ist und ein Durchgangsloch (333) umfasst, das den zweiten Audiopfad (S2) und die Lautsprecheröffnung (207) verbindet, und
wobei der zweite Abschnitt (332) des Gehäuses (330) in Bezug auf den ersten Abschnitt (331) des Gehäuses (330) abgestuft ist.

10. Elektronische Vorrichtung (101) nach Anspruch 9, wobei ein Mindestabstand zwischen der Platte (310) und dem Gehäuse (330) einem Mindestabstand zwischen dem zweiten Abschnitt (332) des Gehäuses (330) und dem dritten geneigten Abschnitt (313) der Platte (310) entspricht.

11. Elektronische Vorrichtung (101) nach Anspruch 1, die ferner ein Dichtungsmittel (340) umfasst, das zwischen der Platte (310) und dem Gehäuse (330) angeordnet ist, und
wobei das Dichtungsmittel (340) den ersten Audiopfad (S1) und den zweiten Audiopfad (S2) abdichtet.

12. Elektronische Vorrichtung (101) nach Anspruch 11, wobei das Dichtungsmittel (340) ein flexibles Material umfasst.

13. Elektronische Vorrichtung (101) nach Anspruch 12, wobei die Platte (310) und das Gehäuse (330) verschraubt sind, und
wobei das Dichtungsmittel (340) durch die Kopplungskraft zwischen der Platte (310) und dem Gehäuse (330) komprimiert wird.

14. Elektronische Vorrichtung (101) nach Anspruch 12, wobei das Gehäuse (230) eine erste Platte (202), eine der ersten Platte (202) gegenüberliegende zweite Platte (211) und ein seitliches Lünettenelement (218) umfasst, das einen Raum zwischen der ersten Platte (202) und der zweiten Platte (211) umgibt, und
wobei das Dichtungsmittel (340) durch die Kopplungskraft zwischen der ersten Platte (202) oder der zweiten Platte (211) und dem seitlichen Lünettenelement (218) komprimiert wird.

## Revendications

1. Dispositif électronique (101) comprenant :
un logement (230) comprenant un trou de haut-parleur (207) ;
une carte de circuit imprimé, PCB, (250) disposée dans le logement (230) ; et
un module de haut-parleur (300), empilé avec au moins une partie de la PCB, comprenant un haut-parleur (320) et une enceinte entourant le haut-parleur (320),
où l'enceinte du module de haut-parleur (300) comprend :
un boîtier (330) supportant le haut-parleur (320), et
une plaque (310) comprenant :
une première partie horizontale (311), en contact avec une surface (251) de la PCB (250) faisant face au haut-parleur (320),
une deuxième partie horizontale (312) espacée de ladite surface de la PCB (250),
une troisième partie inclinée (313) reliant la première partie (311) de la plaque (310) et la deuxième partie (312) de la plaque (310),
où une première partie (331) du boîtier (330) et la première partie horizontale (311) de la plaque (310) forment un premier chemin audio (S1) entre le haut-parleur (320) et la plaque (310), et
où une deuxième partie (332) du boîtier (330) et la deuxième partie horizontale (313) de la plaque (310) forment un deuxième chemin audio (S2) reliant le premier chemin audio (S1) au trou de haut-parleur (207) du logement (230).

2. Dispositif électronique (101) selon la revendication 1, où la troisième partie inclinée (313) de la plaque (310) est en contact avec un bord d'une extrémité (253) de la PCB (250) proche de la deuxième partie horizontale (312) de la plaque (310) des deux extrémités de la PCB (250).

3. Dispositif électronique (101) selon la revendication 1, où la première partie horizontale (311) de la plaque (310) comprend une ouverture (314) exposant une partie (251a) de ladite surface (251) de la PCB (250) au premier chemin audio (S1), et
où le dispositif électronique (101) comprend en outre au moins un composant électronique (350) relié à la partie (251a) de la PCB (250) exposée à travers l'ouverture (314).

4. Dispositif électronique (101) selon la revendication 3, où l'au moins un composant électronique (350) occupe une partie du premier chemin audio (S1).

5. Dispositif électronique (101) selon la revendication 4, où le haut-parleur (320) comprend un diaphragme (321) configuré pour vibrer dans une première direction vers ladite surface (251) et dans une deuxième direction opposée à la première direction, et
où une longueur de l'au moins un composant électronique (350) dans la deuxième direction est inférieure à la distance entre ladite surface (251) de la PCB (250) et une position de déplacement maximal (P2) du diaphragme (321) dans la première direction.

6. Dispositif électronique (101) selon la revendication 1, où la troisième partie inclinée (313) de la plaque (310) a une inclinaison par rapport à la première partie horizontale (311) de la plaque (310).

7. Dispositif électronique (101) selon la revendication 1, où la distance entre la troisième partie inclinée (313) de la plaque (310) et le boîtier (330) est augmentée par la première partie horizontale (311) de la plaque (310) qui est configurée pour être en contact avec la PCB (250).

8. Dispositif électronique (101) selon la revendication 1, où la première partie horizontale (311) de la plaque (310) est soudée à ladite surface (251) de la PCB (250).

9. Dispositif électronique (101) selon la revendication 1, où la première partie (331) du boîtier (330) est reliée à la première partie horizontale (311) de la plaque (310) et comprend une partie de support (331a) supportant le haut-parleur (320) et,
où la deuxième partie (332) du boîtier (330) est reliée à la deuxième partie horizontale (312) de la plaque (310) et comprend un trou traversant (333) reliant le deuxième chemin audio (S2) et le trou de haut-parleur (207), et
où la deuxième partie (332) du boîtier (330) est étagée par rapport à la première partie (331) du boîtier (330).

10. Dispositif électronique (101) selon la revendication 9, où une distance minimale entre la plaque (310) et le boîtier (330) correspond à une distance minimale entre la deuxième partie (332) du boîtier (330) et la troisième partie inclinée (313) de la plaque (310).

11. Dispositif électronique (101) selon la revendication 1, comprenant en outre un scellant (340) disposé entre la plaque (310) et le boîtier (330), et
où le scellant (340) scelle le premier chemin audio (S1) et le deuxième chemin audio (S2).

12. Dispositif électronique (101) selon la revendication 11, où le scellant (340) comprend un matériau flexible.

13. Dispositif électronique (101) selon la revendication 12, où la plaque (310) et le boîtier (330) sont vissés, et
où le scellant (340) est comprimé par la force de couplage entre la plaque (310) et le boîtier (330).

14. Dispositif électronique (101) selon la revendication 12, où le logement (230) comprend une première plaque (202), une deuxième plaque (211) opposée à la première plaque (202) et un élément de cadre latéral (218) entourant un espace entre la première plaque (202) et la deuxième plaque (211), et
où le scellant (340) est comprimé par la force de couplage entre la première plaque (202) ou la deuxième plaque (211), et l'élément de cadre latéral (218).
